# EUROPÄISCHE PATENTSCHRIFT

(11) **EP 0 387 489 B1**
(45) Veröffentlichungstag und Bekanntmachung des Hinweises auf die Patenterteilung: **12.01.1994**
(21) Anmeldenummer: 90100616.3
(22) Anmeldetag: 12.01.1990
(51) Int. Cl.: A01N 43/40, C07D 211/58

(54) **Verwendung von 2,2,6,6-Tetramethyl-4-aminopiperidinamiden als Fungizide**
Use of 2,2,6,6-tetramethyl-4-amino-piperidine amides as fungicides
Utilisation des amides 2,2,6,6-tétraméthyl-4-amino-pipéridine comme fongicides

(30) Priorität: 18.01.1989 DE 3901246
(43) Veröffentlichungstag der Anmeldung: 19.09.1990
(73) Patentinhaber: BASF Aktiengesellschaft, 67063 Ludwigshafen (DE)
(72) Erfinder: Aumueller, Alexander, Dr., D-6705 Deidesheim (DE); Neumann, Peter, Dr., D-6800 Mannheim (DE); Lorenz, Gisela, Dr., D-6730 Neustadt (DE); Ammermann, Eberhard, Dr., D-6700 Ludwigshafen (DE)

(56) Entgegenhaltungen:
- EP-A- 0 000 333
- EP-A- 0 083 308
- EP-A- 0 182 224
- EP-A- 0 224 951
- DE-A- 1 470 357
- US-A- 3 262 936
- US-A- 3 325 500

## Beschreibung

Aufgabe der Erfindung war es, Fungizide mit verbesserter Wirkung bei verminderter Aufwandmenge anzuwenden.

Es ist bekannt, N-iso-Tridecyl-2,6-dimethylmorpholin als Fungizid zu verwenden (US-3 468 885). Seine fungizide Wirkung ist in manchen Fällen nicht ausreichend. In EP-A-0 224 951 werden tetramethylsubstituierte Pyridine als Stabilisatoren beschrieben. Es findet sich kein Hinweis auf eine fungizide Wirkung.

Überraschend wurde gefunden, daß die Verbindungen der allgemeinen Formel (I) 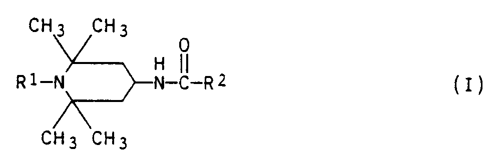
in der
- R¹: Wasserstoff, OH, O, C₁-C₄-Alkyl, Cyanmethyl, Benzyl oder C₁-C₄-Carboxyl und
- R²: Wasserstoff, C₁-C₁₈-Alkyl, C₂-C₁₈-Alkenyl, C₃-C₁₂-Cycloalkyl, das gegebenenfalls durch 1 bis 3 C₁-C₄-Alkylgruppen substituiert ist, Phenyl oder C₇-C₁₀-Phenylalkyl bedeutet, wobei jeder der beiden Phenylreste gegebenenfalls durch C₁-C₄-Alkyl, C₁-C₄-Alkoxy, Halogen (Fluor, Chlor, Brom), Cyan oder Hydroxy substituiert ist, sowie deren für Pflanzen verträgliche Säureadditionssalze, bei der Verwendung als Fungizide eine sehr gute fungizide Wirkung zeigen.

Alkylreste für R¹ können beispielsweise sein: Ethyl, Propyl, Butyl und insbesondere Methyl.

Carboxylreste für R¹ können beispielsweise sein: Formyl, Propionyl, Butanoyl und insbesondere Acetyl. Der Rest O bildet mit dem Stickstoffatom, dessen Substituent er ist, den Nitroxylrest =N-O

Besonders bevorzugt für R¹ ist Wasserstoff.

Alkylreste für R² können sowohl verzweigt als auch unverzweigt sein.

Alkylreste für R² können beispielsweise sein: Methyl, Ethyl, Propyl, iso-Propyl, Butyl, iso-Butyl, tertiär-Butyl, Pentyl, iso-Pentyl, tertiär-Pentyl, Hexyl, Heptyl, Octyl, Nonyl, Decyl, Undecyl, Tridecyl, Tetradecyl, Pentadecyl, Hexadecyl, Heptadecyl oder Octadecyl und insbesondere Dodecyl.

Alkenylreste für R² können beispielsweise Ethenyl, Propenyl, Butenyl, Pentenyl oder Oleyl sein.

Cycloalkylreste für R² sind beispielsweise: Cyclopropyl, Cyclobutyl, Cyclopentyl, Cyclohexyl, 4-Methylcyclohexyl oder 3-Methylcyclohexyl.

R² kann beispielsweise auch sein: Phenyl, C₁-C₄-Alkylphenyl, C₁-C₄-Alkoxyphenyl, Tolyl, 2-, 3- oder 4-Methoxyphenyl, 2- oder 3-Methylphenyl, Halogenphenyl, 2-, 3- oder 4-Fluorphenyl, 2-, 3- oder 4-Chlorphenyl, 2-, 3- oder 4-Hydroxyphenyl oder 2-, 3- oder 4-Cyanphenyl.

Phenylalkylreste für R² können beispielsweise sein: Benzyl, Phenylethyl, Phenylpropyl, Phenylbutyl oder ein Rest der Formel 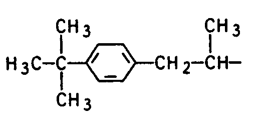
R² kann beispielsweise auch Wasserstoff sein.

Geeignete Säureadditionssalze sind beispielsweise die Chloride, Bromide, Sulfate, Methylsulfonate, Nitrate, Phosphate, Oxalate oder Dodecylbenzolsulfonate. Die Wirksamkeit der Salze geht auf das Kation zurück, so daß die Wahl des Anions im allgemeinen beliebig ist.

Die Verbindungen der Formel I sind z.T. bekannt, z.T. neu.

2,2,6,6-Tetramethyl-4-aminopiperidinamide werden beispielsweise in DE 23 49 962 beschrieben.

Die Verbindungen der allgemeinen Formel (I) lassen sich beispielsweise durch an sich literaturbekannte Umsetzung von Aminen der allgemeinen Formel (II) mit Carbonsäurederivaten der allgemeinen Formel (III), in der R³ Chlor oder C₁-C₄-Alkoxy bedeuten können und R¹ und R² die oben genannten Bedeutungen haben, herstellen. 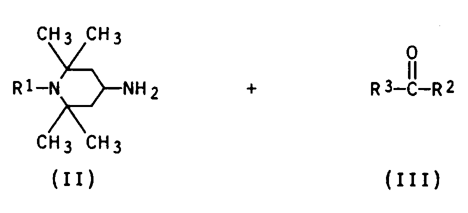
Verbindungen der allgemeinen Formel (I), in denen R¹ Wasserstoff ist, können durch an sich literaturbekannte Verfahren wie reduktive Aminierung, Alkylierung, Acylierung oder Cyanmethylierung in Verbindungen der allgemeinen Formel (I) mit R¹ verschieden von Wasserstoff überführt werden.

### Herstellbeispiel

a) 69 g Tridecansäure wurden in 57,5 g Thionylchlorid 2,5 h auf 60 bis 65°C erhitzt. Das überschüssige Thionylchlorid wurde abdestilliert und der Rückstand (Tridecanoylchlorid) in 100 ml Dichlormethan gelöst.
b) Zu 134 g 2,2,6,6-Tetramethyl-4-amino-piperidin in 600 ml Dichlormethan wurde unter leichtem Sieden die unter a) bereitete Lösung von Tridecanoylchlorid getropft. Man rührte 3 Stunden unter Rückfluß, ließ abkühlen und stellte die Mischung durch Zusatz verdünnter Natronlauge alkalisch. Die organische Phase wurde abgetrennt, getrocknet und im Wasserstrahlvakuum vom Lösungsmittel befreit. Der Rückstand wurde im Vakuum fraktionierend destilliert. Man erhielt 98 g der Verbindung 2,2,6,6-Tetramethyl-4-tridecanoylamino)-piperidin (Wirkstoff 1) der Formel 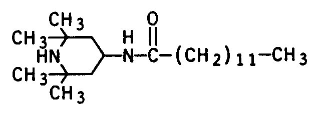 als farbloses Öl vom Siedep. 190°C/0,2 mm, das zu einem farblosen Feststoff vom Schmp. 49 bis 51°C erstarrte.

| | | | | |
|---|---|---|---|---|
| Ber.: | C 74,9 | H 12,6 | N 7,9 | O 4,5 |
| Gef.: | C 74,6 | H 12,6 | N 8,0 | O 4,7 |

Als Wirkstoffe können z.B. die in der folgenden Liste aufgeführten Verbindungen verwendet werden.

| Verbindung Nr. | R¹ | R² | Fp/°C | Sdp./°C bei 0,2 mbar |
|---|---|---|---|---|
| 1 | H | -(CH₂)₁₁-CH₃ | 49- 51 | |
| 2 | H | C(CH₃)₃ | 143-147 | |
| 3 | H | CH₃ | 98-100 | |
| 4 | H | -(CH₂)₁₂-CH₃ | 55- 57 | |
| 5 | -CH₂CN | -(CH₂)₁₃-CH₃ | 101 | |
| 6 | -CH₂CN | -(CH₂)₇-CH₃ | 68 | |
| 7 | -CH₂CN | -C₆H₅ | 179 | |
| 8 | H | H | 153 | |
| 9 | H | -CH=CH₂ | 108 | |
| 10 | H | -(CH₂)₈-CH₃ | | 175-176 |
| 11 | H | -(CH₂)₅-CH₃ | | 164-165 |
| 12 | H | -(CH₂)₇-CH₃ | | 154-158 |
| 13 | H | -(CH₂)₁₅-CH₃ | 70- 72 | |
| 14 | H | -(CH₂)₂-CH₃ | | 138-140 |
| 15 | H | -(CH₂)₃-CH₃ | | 140-145 |
| 16 | -CH₂CN | H | 173 | |
| 17 | H | -(CH₂)₁₄-CH₃ | 65- 66 | |
| 18 | H | -(CH₂)₁₆-CH₃ | 60- 62 | |
| 19 | H | -(CH₂)₉-CH₃ | 33- 35 | |
| 20 | H | -(CH₂)₁₃-CH₃ | 64- 65 | |
| 21 | H | -CH(C₂H₅)-(CH₂)₃-CH₃ | 107-110 | |
| 22 | H | -(CH₂)₄-CH₃ | | 148 |
| 23 | H | -(CH₂)₁₀-CH₃ | | 195 |
| 24 | H | -(CH₂)₆-CH₃ | | 169-170 |
| 25 | H | -(CH₂)₇-CH=CH-(CH₂)₇-CH₃ | | 242 |
| 26 | H | -CH₂CH₃ | 98-100 | |
| 27 | H | Cyclopropyl | 140 | |
| 28 | H | Cyclohexyl | 158 | |
| 29 | H | Cyclopentyl | 130 | |

Die Wirkstoffe zeichnen sich, allgemein ausgedrückt, durch eine hervorragende Wirksamkeit gegen ein breites Spektrum von pflanzenpathogenen Pilzen, insbesondere aus der Klasse der Ascomyceten und Basidiomyceten, aus. Sie sind zum Teil systemisch wirksam und können als Blatt- und Bodenfungizide eingesetzt werden.

Besonders interessant sind die fungiziden Verbindungen für die Bekämpfung einer Vielzahl von Pilzen an verschiedenen Kulturpflanzen oder ihren Samen, insbesondere Weizen, Roggen, Gerste, Hafer, Reis, Mais, Rasen, Baumwolle, Soja, Kaffee, Zuckerrohr, Obst und Zierpflanzen im Gartenbau, Weinbau sowie Gemüse - wie Gurken, Bohnen und Kürbisgewächse -.

Die Wirkstoffe sind insbesondere geeignet zur Bekämpfung folgender Pflanzenkrankheiten:
Erysiphe graminis (echter Mehltau) in Getreide,
Erysiphe cichoracearum und Sphaerotheca fuliginea an Kürbisgewächsen,
Podosphaera leucotricha an Äpfeln,
Uncinula necator an Reben,
Puccinia-Arten an Getreide,
Rhizoctonia-Arten an Baumwolle und Rasen,
Ustilago-Arten an Getreide und Zuckerrohr,
Venturia inaequalis (Schorf) an Äpfeln,
Helminthosporium-Arten an Getreide,
Septoria nodorum an Weizen,
Botrytis cinerea (Grauschimmel) an Erdbeeren, Reben,
Cercospora arachidicola an Erdnüssen,
Pseudocercosporella herpotrichoides an Weizen, Gerste,
Pyricularia oryzae an Reis,
Phytophthora infestans an Kartoffeln und Tomaten,
Fusarium- und Verticillium-Arten an verschiedenen Pflanzen,
Plasmopara viticola an Reben,
Alternaria-Arten an Gemüse und Obst.

Die Verbindungen werden angewendet, indem man die Pflanzen mit den Wirkstoffen besprüht oder bestäubt oder die Samen der Pflanzen mit den Wirkstoffen behandelt. Die Anwendung erfolgt vor oder nach der Infektion der Pflanzen oder Samen durch die Pilze.

Die Wirkstoffe können in die üblichen Formulierungen übergeführt werden, wie Lösungen, Emulsionen, Suspensionen, Stäube, Pulver, Pasten und Granulate. Die Anwendungsformen richten sich ganz nach den Verwendungszwecken; sie sollen in jedem Fall eine feine und gleichmäßige Verteilung der wirksamen Substanz gewährleisten. Die Formulierungen werden in bekannter Weise hergestellt, z.B. durch Verstrecken des Wirkstoffs mit Lösungsmitteln und/oder` Trägerstoffen, gegebenenfalls unter Verwendung von Emulgiermitteln und Dispergiermitteln, wobei im Falle der Benutzung von Wasser als Verdünnungsmittel auch andere organische Lösungsmittel als Hilfslösungsmittel verwendet werden können. Als Hilfsstoffe kommen dafür im wesentlichen in Frage: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel, wie nichtionogene und anionische Emulgatoren (z.B. Polyoxyethylen-Fettalkohol-Ether, Alkylsulfonate und Arylsulfonate) und Dispergiermittel, wie Lignin, Sulfitablaugen und Methylcellulose.

Die fungiziden Mittel enthalten im allgemeinen zwischen 0,1 und 95, vorzugsweise zwischen 0,5 und 90 Gew.% Wirkstoff.

Die Aufwandmengen liegen je nach Art des gewünschten Effektes zwischen 0,02 und 3 kg Wirkstoff oder mehr je ha. Die Wirkstoffe können auch im Materialschutz eingesetzt werden, z.B. gegen Paecilomyces variotii.

Die Mittel bzw. die daraus hergestellten gebrauchsfertigen Zubereitungen, wie Lösungen, Emulsionen, Suspensionen, Pulver, Stäube, Pasten oder Granulate werden in bekannter Weise angewendet, beispielsweiise durch Versprühen, Vernebeln, Verstäuben, Verstreuen, Beizen oder Gießen.

Beispiele für solche Zubereitungen sind:
I. Man vermischt 90 Gew.-Teile der Verbindung Nr. 1 mit 10 Gew.-Teilen N-Methyl-α-pyrrolidon und erhält eine Lösung, die zur Anwendung in Form kleinster Tropfen geeignet ist.
II. 20 Gew.-Teile der Verbindung Nr. 4 werden in einer Mischung gelöst, die aus 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure und 5 Gew.-Teilen des Anlagerungsproduktes und 40 Mol Ethylenoxid an 1 Mol Ricinusöl besteht. Durch Ausgießen und feines Verteilen der Lösung in Wasser erhält man eine wäßrige Dispersion.
III. 20 Gew.-Teile der Verbindung Nr. 6 werden in einer Mischung gelöst, die aus 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.
IV. 20 Gew.-Teile der Verbindung Nr. 1 werden in einer Mischung gelöst, die aus 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.
V. 80 Gew.-Teile der Verbindung Nr. 10 werden mit 3 Gew.-Teilen des Natriumsalzes der Diisobutylnaphthalin-α-sulfonsäure, 10 Gew.-Teilen des Natriumsalzes einer Ligninsulfonsäure aus einer Sulfitablauge und 7 Gew.-Teilen pulverförmigem Kieselsäuregel gut vermischt und in einer Hammermühle vermahlen. Durch feines Verteilen der Mischung in Wasser erhält man eine Spritzbrühe.
VI. 3 Gew.-Teile der Verbindung Nr. 12 werden mit 97 Gew.-Teilen feinteiligem Kaolin innig vermischt. Man erhält auf diese Weise ein Stäubemittel, das 3 Gew.% des Wirkstoffs enthält.
VII. 30 Gew.-Teile der Verbindung Nr. 13 werden mit einer Mischung aus 92 Gew.-Teilen pulverförmigem Kieselsäuregel und 8 Gew.-Teilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.
VIII. 40 Gew.-Teile der Verbindung Nr. 17 werden mit 10 Gew.-Teilen Natriumsalz eines Phenolsulfonsäure-harnstoff-formaldehyd-Kondensates, 2 Gew.-Teilen Kieselgel und 48 Gew.-Teilen Wasser innig vermischt. Man erhält eine stabile wäßrige Dispersion. Durch Verdünnen mit Wasser erhält man eine wäßrige Dispersion.
IX. 20 Gew.-Teile der Verbindung Nr. 18 werden mit 2 Gew.-Teilen Calciumsalz der Dodecylbenzolsulfonsäure, 8 Gew.-Teilen Fettalkoholpolyglykolether, 2 Gew.-Teilen Natriumsalz eines Phenolsulfonsäure-harnstoff-formaldehyd-Kondensats und 68 Gew.-Teilen eines paraffinischen Mineralöls innig vermischt. Man erhält eine stabile ölige Dispersion.

Die fungiziden Mittel können in diesen Anwendungsformen auch zusammen mit anderen Wirkstoffen vorliegen, wie z.B. Herbiziden, Insektiziden, Wachstumsregulatoren und Fungiziden, oder auch mit Düngemitteln vermischt und ausgebracht werden. Beim Vermischen mit Fungiziden erhält man dabei in vielen Fällen eine Vergrößerung des fungiziden Wirkungsspektrums.

### Anwendungsbeispiele

Als Vergleichswirkstoff wurde N-iso-Tridecyl-2,6-dimethylmorpholin (A) - bekannt aus DE 1 164 152 - benutzt.

### Anwendungsbeispiel 1

### Wirksamkeit gegen Rebenperonospora

Blätter von Topfreben der Sorte "Müller Thurgau" wurden mit wäßriger Spritzbrühe, die 80 % Wirkstoff und 20 % Emulgiermittel in der Trockensubstanz enthielt, besprüht. Um die Wirkungsdauer der Wirkstoffe beurteilen zu können, wurden die Pflanzen nach dem Antrocknen des Spritzbelages 8 Tage im Gewächshaus aufgestellt. Erst dann wurden die Blätter mit einer Zoosporenaufschwemmung von Plasmopara viticola (Rebenperonospora) inoculiert. Danach wurden die Reben zunächst für 48 Stunden in einer wasserdampfgesättigten Kammer bei 24°C und anschließend für 5 Tage in einem Gewächshaus mit Temperaturen zwischen 20 und 30°C aufgestellt. Nach dieser Zeit wurden die Pflanzen zur Beschleunigung des Sporangienträgerausbruches abermals für 16 Stunden in der feuchten Kammer aufgestellt. Dann erfolgte die Beurteilung des Ausmaßes des Pilzausbruches auf den Blattunterseiten.

Das Ergebnis zeigt, daß die Wirkstoffe 1, 2, 3, 6, 10, 12, 13, 17, 18, 19, 20 und 23 bei der Anwendung als 0,05 %ige (Gew.%) Spritzbrühe eine bessere fungizide Wirkung zeigen (90 %) als der bekannte Vergleichswirkstoff (A) (55 %).

### Anwendungsbeispiel 2

### Wirksamkeit gegen Phytophthora infestans

Blätter von Topfreben der Sorte "Große Fleischtomate" wurden mit wäßriger Spritzbrühe, die 80 % Wirkstoff und 20 % Emulgiermittel in der Trockensubstanz enthielt, besprüht. Nach 24 Stunden wurden die Blätter mit einer Zoosporenaufschwemmung des Pilzes Phytophthora infestand infiziert. Die Pflanzen wurden dann in einer wasserdampfgesättigten Kammer bei Temperaturen zwischen 16 und 18°C aufgestellt. Nach 6 Tagen hatte sich die Krankheit auf den unbehandelten, jedoch infizierten Kontrollpflanzen so stark entwickelt, daß die fungizide Wirksamkeit der Substanzen beurteilt werden konnte.

Das Ergebnis zeigt, daß die Wirkstoffe 4, 13, 17, 18, 19, 20 und 23 bei der Anwendung als 0,025 %ige Spritzbrühe eine bessere fungizide Wirkung zeigen (90 %) als der bekannte Vergleichswirkstoff A (20 %).

## Patentansprüche

1. Verwendung von Verbindungen der allgemeinen Formel 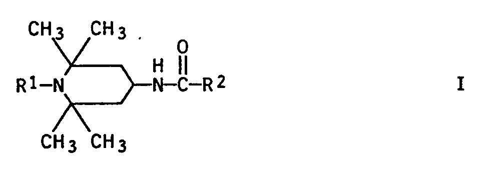 in der
R¹ Wasserstoff, OH, O, C₁-C₄-Alkyl, Cyanmethyl, Benzyl oder C₁-C₄-Carboxyl und
R² Wasserstoff, C₁-C₁₈-Alkyl, C₂-C₁₈-Alkenyl, C₃-C₁₂-Cycloalkyl, das gegebenenfalls durch 1 bis 3 C₁-C₄-Alkylgruppen substituiert ist, Phenyl oder C₇-C₁₀-Phenylalkyl bedeutet, wobei jeder der beiden Phenylreste gebenenfalls einfach bis dreifach durch C₁-C₄-Alkyl, C₁-C₄-Alkoxy, Halogen, Cyan oder Hydroxy substituiert ist, sowie deren für Pflanzen verträgliche Säureadditionssalze als Fungizide.

2. Verbindung der allgemeinen Formel I, in der R¹ Wasserstoff und R² n-Dodecyl bedeuten.

3. Fungizide Zubereitung, enthaltend einen Trägerstoff und eine fungizid wirksame Menge einer Verbindung gemäß Anspruch 2.

4. Verfahren zur Bekämpfung von Pilzen, dadurch gekennzeichnet, daß man eine fungizid wirksame Menge einer Verbindung der allgemeinen Formel I gemäß Anspruch 1 oder seines für Pflanzen verträglichen Säureadditionssalzes auf die Pilze oder auf durch Pilzbefall bedrohten Boden, Materialien, Pflanzen oder Saatgüter einwirken läßt.

## Claims

1. The use of compounds of the general formula 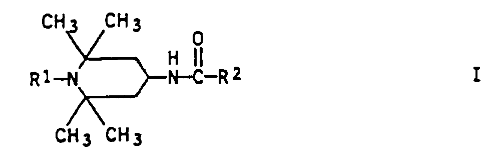 where
R¹ is hydrogen, OH, O, C₁-C₄-alkyl, cyanomethyl, benzyl or C₁-C₄-carboxyl and
R² is hydrogen, C₁-C₁₈-alkyl, C₂-C₁₈-alkenyl, c₃-c₁₂-cycloalkyl which is optionally substituted by 1 to 3 C₁-C₄-alkyl groups, or phenyl or C₇-C₁₀-phenylalkyl, where each of the two phenyl radicals may be monosubstituted to trisubstituted by C₁-C₄-alkyl, C₁-C₄-alkoxy, halogen, cyano or hydroxyl, and their plant-tolerable acid addition salts as fungicides.

2. A compound of the general formula I, where R¹ is hydrogen and R² is n-dodecyl.

3. A fungicidal preparation, containing a carrier and a fungicidally active amount of a compound as claimed in claim 2.

4. A method for controlling fungi, which comprises allowing a fungicidally active amount of a compound of the general formula I as claimed in claim 1 or its plant-tolerable acid addition salt to act on the fungi or on soil, materials, plants or seed threatened by fungal attack.1

## Revendications

1. Utilisation comme fongicides, de composé de la formule générale 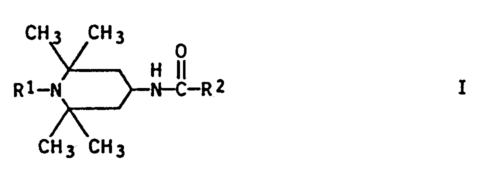 dans laquelle
R1 représente hydrogène, OH, O, alkyle en C1-C4, cyanométhyle, benzyle ou carboxyle en C1-C4 et
R2 représente hydrogène, alkyle en C1-C18, alcényle en C2-C18, cycloalkyle en C3-C12 qui est éventuellement substitué par 1 à 3 groupes alkyle en C1-C4, phényle ou phényl-alkyle en C7-C10, chacun des deux restes phényle étant éventuellement substitué une à trois fois par alkyle en C1-C4, alcoxy en C1-C4, halogène, cyano ou hydroxy,
ainsi que leurs sels d'addition d'acide acceptables par les plantes.

2. Composés selon la formule générale I, dans laquelle R1 représente l'hydrogène et R2 le n-dodécyle.

3. Préparation fongicide contenant un véhicule et une quantité efficace de point de vue fongicide d'un composé selon la revendication 2.

4. Procédé de lutte contre les champignons, caractérisé par le fait qu'on fait agir sur les champignons ou sur les sols, matériaux, plantes ou semences menacées par une attaque par champignons, une quantité efficace du point de vue fongicide d'un composé de la formule générale I selon la revendication 1 ou son sel d'addition d'acide acceptable par les plantes.
